# EUROPÄISCHE PATENTSCHRIFT

(11) **EP 1 332 076 B1**
(45) Veröffentlichungstag und Bekanntmachung des Hinweises auf die Patenterteilung: **26.04.2006**
(21) Anmeldenummer: 01988672.0
(22) Anmeldetag: 26.10.2001
(51) Int. Cl.: B60S 1/40

(54) **VORRICHTUNG ZUM VERBINDEN EINES WISCHERARMS MIT EINEM WISCHBLATT SOWIE WISCHERARM UND WISCHBLATT UNTER VERWENDUNG EINER SOLCHEN VORRICHTUNG**
DEVICE FOR CONNECTING A WIPER ARM TO A WIPER BLADE AND WIPER ARM AND WIPER BLADE USING SUCH A DEVICE
DISPOSITIF DE CONNEXION D'UN BRAS D'ESSUIE-GLACE A UN BALAI D'ESSUIE-GLACE ET BRAS D'ESSUIE-GLACE ET BALAI D'ESSUIE-GLACE FAISANT INTERVENIR UN TEL DISPOSITIF

(30) Priorität: 28.10.2000 DE 10053602
(43) Veröffentlichungstag der Anmeldung: 06.08.2003
(73) Patentinhaber: ROBERT BOSCH GMBH, 70442 Stuttgart (DE)
(72) Erfinder: BASEOTTO, Michel, B-3550 Hasselt (BE); WILMS, Christian, B-3582 Beringen (BE); VERELST, Hubert, B-3300 Tienen (BE); BREESCH, Frans, B-3840 Borgloon (BE); VANGEEL, Tom, B-3540 Herk-de-Stad (BE)
(74) Vertreter: Kisselmann, Rudi
(86) Internationale Anmeldenummer: PCT/DE2001/004020
(87) Internationale Veröffentlichungsnummer: WO 2002/034593

(56) Entgegenhaltungen:
- DE-A- 19 860 644

## Beschreibung

### Stand der Technik

Die Erfindung betrifft eine Vorrichtung zum Verbinden eines Wischerarms mit einem Wischblatt nach der Gattung des Hauptanspruchs. Eine derartige Vorrichtung ist aus der DE-A-19860644 bekannt. Bei bekannten Wischblättern dieser Art (EP-A-0 753 439) ist ein Wischerarm aufgeteilt m einen inneren Wischerarm sowie eine äußere Abdeckkappe. Der innere Wischerarm besteht in herkömmlicher Weise aus einem festen Armabschnitt und einem daran angelenkten, federbelasteten Gelenkteil, das sich bis in den Bereich erstreckt, an dem ein Wischblatt befestigbar ist. Über dem Wischerarm erstreckt sich die Abdeckkappe, die sich zum einen am festen Teil des Wischerarms abstützt und zum anderen in den Bereich über den Anlenkpunkt für das Wischblatt bis zum Ende des Wischblatts erstreckt ist. Die Abdeckkappe weist einen Anschluss für das Wischblatt auf, so dass dieses in seiner Position festgelegt ist. Der Auflagedruck vom Wischerarm auf das Wischblatt wird jedoch von der Verlängerung des inneren Wischerarms übertragen. Hierfür wird ein Zwischenstück eingesetzt, das die Verbindung zwischen Wischerarm, Abdeckkappe und Wischblatt, das hierfür eine zusätzliche Achse benötigt, bereitstellt. Dieser Aufbau ist aufgrund der Vielzahl der Einzelteile zum einen sehr teuer und zum anderen montageunfreundlich.

Aus der gattungsbildenden DE-A-198 60 644 ist eine Vorrichtung zum Verbinden des Wischerarms mit dem Wischblatt bekannt, bei der der Wischerarm U-förmig ausgebildet ist und mit einem Sicherungselement im Sinne einer Gelenkverbindung zusammenwirkt. Das Sicherungselement umgreift mit Führungsschienen Längsschienen des Wischblatts und weist an den Außenseiten der Führungsschienen nach außen stehenden Gelenkzapfen auf, die den Wischerarm durchdringen und dadurch sichtbar werden.

### Vorteile der Erfindung

Die erfindungsgemäße Vorrichtung mit dem Merkmalen des Hauptanspruchs hat den Vorteil, dass der Wischerarm einteilig ausgeführt ist und dabei sowohl die Positionierung des Wischblatts, die Übertragung der für den Wischbetrieb notwendigen Pendelbewegung, die Übertragung des Auflagedrucks sowie gestalterische Elemente übernimmt. Am Wischblatt ist ein Basiselement befestigt, das die Aufgabe der herkömmlichen Achse übernimmt und mit dem Wischerarm nach dem Zusammenfügen von Wischerarm und Wischblatt zusammenwirkt. Ein Zwischenteil, mit dem die Verbindung gesichert oder positioniert wird, ist nicht notwendig. Dadurch wird die Montage und Demontage von Wischerarm und Wischblatt einfach und schnell - sowohl bei der Erstmontage des Gesamtsystems als auch beim späteren Auswechseln des Wischblatts durch den Endverbraucher.

Besonders einfach gestaltet sich die Verbindung dadurch, dass das Basiselement zumindest zwei sich in Richtung der U-Basis des Wischerarms erstreckende Flügel aufweist, die mit den Haltemittel im Sinne einer Gelenkverbindung korrespondierende Gegenhaltemittel aufweisen. Das Basiselement kann als einfaches Blechbiegestanzteil ausgeführt sein, das kostengünstig herstellbar und an einem Tragelement des Wischblatts befestigbar ist. Dieses Basiselement ist fest und damit unverlierbar mit dem Wischblatt verbindbar und übernimmt die Funktion der sonst üblichen und mit zusätzlichem Aufwand bereitzustellenden Gelenkachse des Wischblatts.

Durch die in den Unteransprüchen aufgeführten Merkmale sind vorteilhafte Weiterbildungen der Vorrichtung nach dem Hauptanspruch möglich. Anstatt einer Gelenkachse wird vorgeschlagen, die Gegenhaltemittel als Erhebungen oder Durchbrüche auszubilden. Diese korrespondieren dann mit den Haltemitteln des Wischerarms und ersetzen damit, wie erwähnt, die sonst übliche Gelenkachse.

Sind die Haltemittel an den Seiten der U-Schenkel des Wischerarms ausgebildet, hat es sich als vorteilhaft erwiesen hierfür Erhebungen vorzusehen. Die Erhebungen können, wenn der Wischerarm aus einem Kunststoff gefertigt ist, spritzgusstechnisch einfach direkt an die Innenseite der U-Schenkel angeformt sein. Nach außen sind diese Verbindungsmittel nicht sichtbar.

Neben dem, an der Innenseite ausgeformten Haltemittel können weitere Erhebungen angeordnet sein, die in Zusammenbaustellung an den Flügeln des Basiselements anliegen und dieses spielarm führen. Damit kann ein insbesondere geräuscharmer Wischbetrieb ermöglicht werden.

Eine verbesserte Führung ergibt sich, wenn die Haltemittel als sich im Abstand von den U-Schenkel erstreckende Gegenflügel ausgebildet sind, die sich in Zusammenbaustellung mit den Flügeln des Basiselements überlappen. Auf diese Weise ergibt sich ein Spalt zwischen den U-Schenkeln und den Gegenflügeln, in die die Flügel des Basiselements einführbar sind. Je nach Breite des Spalts kann ein gewisses Spiel oder ein gewisser Druck zwischen den Flügeln und Gegenflügeln beziehungsweise den U-Schenkeln erzeugt werden. Die Gegenflügel sind dazu vorteilhaft etwas elastisch ausgebildet, so dass diese auslenken und damit Toleranzen aufnehmen können.

Das Wischblatt kann sehr einfach in den Wischerarm eingeklippst oder eingerastet werden, wenn die Haltemittel und/oder die Gegenhaltemittel Schrägen oder Rundungen aufweisen. Es ist aber auch denkbar, dass die Haltemittel oder die Gegenhaltemittel Durchbrüche mit Öffnungen in Richtung der Gegenhaltemittel beziehungsweise Haltemittel aufweisen. Diese Öffnungen könnten eine Engstelle besitzen, die dann ein Verrasten mit entsprechenden Erhebungen der Gegenhaltemittel beziehungsweise der Haltemittel ermöglichen. Hierfür kann dann unter Umständen anstatt Erhebungen auch eine Achse von Vorteil sein.

Die Erfindung betrifft auch einen Wischerarm und ein Wischblatt nach den Ansprüche 8 und 9 insbesondere für eine derartige Vorrichtung.

### Zeichnungen

In den Zeichnungen sind zwei Ausführungsbeispiele der erfindungsgemäßen Vorrichtung dargestellt und in der nachfolgenden Beschreibung näher erläutert. Es zeigen
Figur 1 ein in einen Wischerarm eingerastetes Wischblatt in Schrägansicht,
Figur 2 Wischerarm und Wischblatt nach Figur 1 in entrasteter Stellung,
Figur 3 eine Ansicht nach III in Figur 2,
Figur 4 einen Schnitt entlang der Linie IV-IV in Figur 5 nach dem zweiten Ausführungsbeispiel,
Figur 5 nach Linie V-V in Figur 4 ohne Wischblatt,
Figur 6 ein Basiselement nach dem zweiten Ausführungsbeispiel in Schrägdarstellung und
Figur 7 eine Ansicht von schräg unten in einen Wischerarm nach dem zweiten Ausführungsbeispiel.

Die einzelnen Figuren sind zueinander nicht maßstäblich gezeichnet.

### Beschreibung

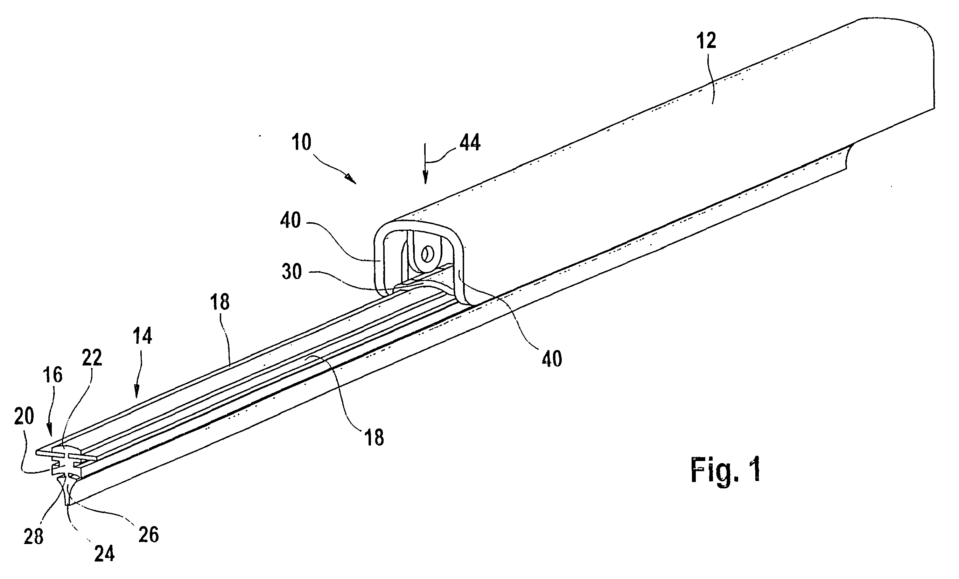

In Figur 1 ist ein Wischersystem 10 mit einem Wischerarm 12 und einem Wischblatt 14 dargestellt. Das Wischblatt 14 weist ein Tragelement 16 auf, das aus zwei Leisten 18 besteht, die in Längsnuten einer Wischleiste 20 liegen. Die Längsnuten sind in einem Kopfbereich 22 der Wischleiste 20 angeordnet, an den sich ein an die Wischlippe 24 aufweisender Wischkeil 26 anschließt, der über einen Kippsteg 28 mit dem Kopfbereich 22 verbunden ist.

Das Wischblatt 14 ist in Figur 1 in einer gestreckten Form gezeichnet, wie sie beispielsweise eintritt, wenn das Wischblatt 14 über eine sehr ebene Scheibe geführt wird. In seiner von der Scheibe abgehobenen Stellung sich entspannt ausbildenden Form ist das Wischblatt 14 derart gebogen, dass die Wischleiste 20 in einer konkaven Innenseite des Tragelements 16 liegt. Beim Aufsetzen des Wischblatts 14 auf eine Scheibe berühren somit die Enden des Wischblatts 14 zuerst die Scheibe und erst bei weiterem Druck legt sich das gesamte Wischblatt auf die Scheibe. Das Tragelement 16 mit seiner derart vorgebogenen Form ersetzt damit das aufwendige Tragbügelsystem der bekannten Bügelwischblätter.

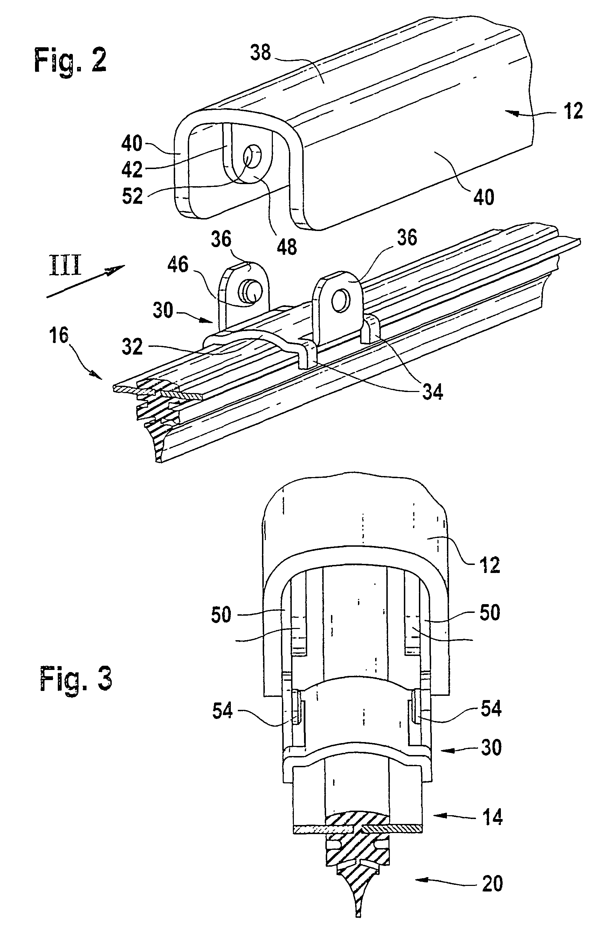

Auf dem Tragelement 16 ist ein auch den Kopfbereich 22 der Wischleiste 20 übergreifendes Basiselement 30 angeordnet (Figur 2). Das Basiselement weist einen Grundkörper 32 auf, der das Tragelement 16 sowie den Kopfbereich 22 der Wischleiste 20 überbrückt und an dessen äusseren Enden Krallen 34 angeformt sind, die die Leisten 18 des Tragelements 16 formschlüssig umgreifen. Das Basiselement 30 ist zusätzlich zu diesem Formschluß mit dem Tragelement 16 verschweißt, wodurch einerseits ein fester Halt des Basiselements 30 auf dem Tragelement gewährleistet ist und andererseits die Leisten 18 in den Längsnuten der Wischleiste 20 gehalten werden.

Vom Grundkörper 32 des Basiselements 30 erstrecken sich zwei Flügel 36 in etwa parallel und senkrecht zum Grundkörper 32 weg vom Tragelement 16. Das Basiselement 30 stellt damit einen ersten Teil einer Kupplungsvorrichtung zum Verbinden des Wischblatts mit dem Wischerarm dar.

Der Wischerarm 12 ist U-förmig ausgebildet mit einer U-Basis 38, an die sich zwei U-Schenkel 40 anschließen, die sich (Figur 2) in Richtung auf das Wischblatt 14 erstrecken. Wie in Figur 1 erkennbar, übergreifen die U-Schenkel 40 in Zusammenbaustellung zwischen Wischerarm 12 und Wischblatt 14 das Basiselement 30 vollständig. Auch in der Längserstreckung wird das Basiselement 30 vom Wischerarm 12 übergriffen. Der Wischerarm 12 ist in den Figuren 1 und 2 nur bis kurz nach dem Bereich der Verbindung zum Wischblatt 14 geführt, kann jedoch in einer weiteren Ausgestaltung auch bis zum Ende des Wischblatts 14 reichen und das Wischblatt 14 somit vollständig überdecken.

Innerhalb seiner U-Form sind am Wischerarm 12 Haltemittel 42 ausgebildet, die einen zweiten Teil einer Kupplungsvorrichtung bilden, die in Zusammenbaustellung mit dem ersten Teil der Kupplungsvorrichtung zusammenwirken (Figur 1).

Die Haltemittel 42 des Wischerarms 12 wirken mit den Flügeln 36 des Basiselements 30 in Zusammenbaustellung derart zusammen, das sich das Wischblatt 14 relativ zum Wischerarm 12 verdrehen kann. Die Haltemittel 42 sind somit Gelenkmittel zum gelenkigen Halten des Wischblatts 14. Über die Haltemittel 42, die eine Positionsfixierung des Wischblatts 14 relativ zum Wischerarm 12 bewirken, wird auch eine vom Wischerarm 12 auf das Wischblatt 14 in einer Betriebsstellung auszuübende Anlagekraft 44 auf das Wischblatt 12 übertragen. Die Anlagekraft wird durch eine hier nicht dargestellte Feder, die am Wischerarm 12 einerseits, der damit ein federbelastetes Gelenkteil darstellt, und an einem festen Armabschnitt andererseits angreift, erzeugt.

An den Flügeln 36 des Basiselements 30 ist jeweils eine kreisrunde Erhebung 46 ausgeformt, die sich aufeinander zu erstrecken und die Gegenhaltemittel sind, die mit den Haltemittel 42 im Sinne einer Gelenkverbindung korrespondieren. Die Haltemittel 42 sind dazu als Gegenflügel 48 ausgebildet, die sich in einem Abstand 50 im Wesentlichen parallel zu den U-Schenkeln 40 erstrecken. In Zusammenbaustellung überlappen sich die Flügel 36 des Basiselements 30 mit den Gegenflügeln 48 des Wischerarms 12. Im Überlappungsbereich sind die Erhebungen 46 an den Flügeln 36 so angeordnet, dass sie in entsprechend angeordneten Durchbrüchen 52 in den Gegenflügeln 48 in Zusammenbaustellung ragen.

Bei der Montage des Wischblatts 14, an dem das Basiselement 30 bereits befestigt ist, mit dem Wischblatt 14, wird das Wischblatt 14 von unten an den Wischerarm 12 herangeführt, bis die Flügel 36 an den Gegenflügeln 48 anliegen. Dann wird das Wischblatt senkrecht zu seiner Längserstreckung in Richtung des Wischerarms 12 bewegt, so dass die Flügel 36 in die Abstände 50 eintauchen. Sobald die Erhebungen 46 in den Bereich der Gegenflügel 48 gelangen, lenken die Gegenflügel 48 aus, bis dann beim weiteren nach oben Führen des Wischblatts 14 die Erhebungen 46 in die Durchbrüche 42 einrasten. Um das Auslenken zu erleichtern, sind an den Erhebungen 46 Schrägen beziehungsweise Rundungen 54 angebracht. Diese können natürlich auch am unteren Ende der Gegenflügel 48 vorgesehen sein.

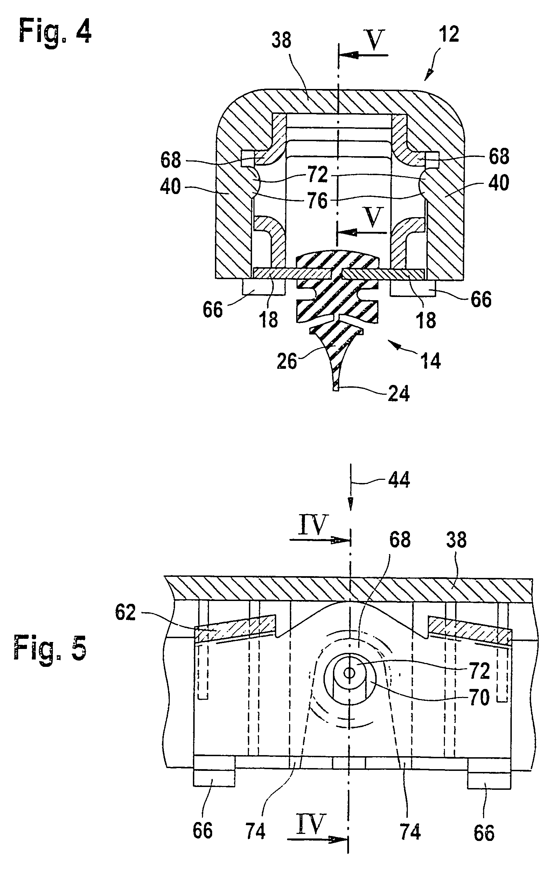

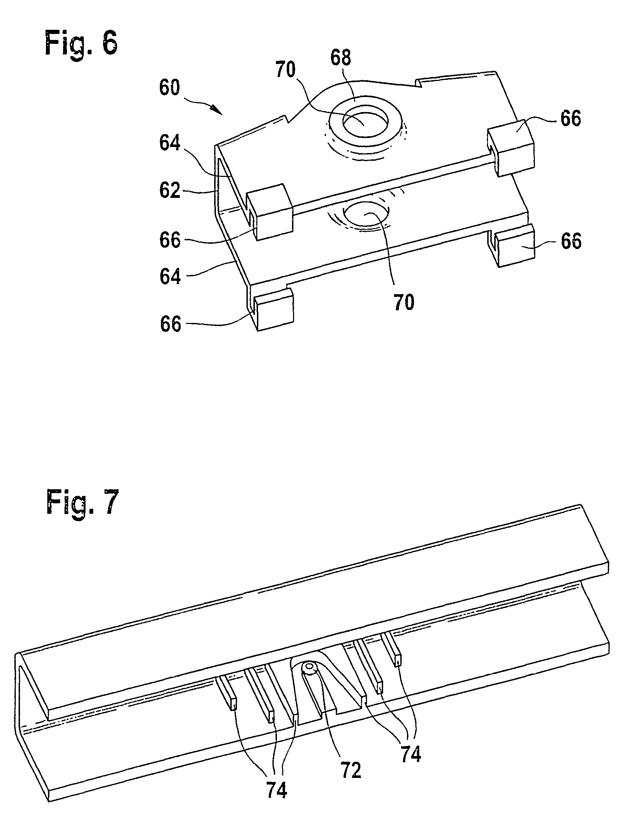

In einem zweiten Ausführungsbeispiel nach den Figuren 4 bis 7 sind gleiche Teile mit gleichen Bezugszahlen versehen. Es ist in Figur 4 in einem Schnitt ein Wischerarm 12 dargestellt, der über eine Kupplungsvorrichtung ein Wischblatt 14 hält. Am Wischblatt 14 ist ein Basiselement 60 (Figuren 4 und 6) befestigt, das eine sich der Innenkontur des Wischerarms 12 anpassende U-Form mit einer U-Basis 62 und U-Schenkeln 64 hat. An den U-Schenkeln 64 sind Krallen 66 angeordnet, die, wenn das Basiselement 60 mit dem Wischblatt 14 verbunden ist, die Leisten 18 des Tragelements 16 formschlüssig umgreifen. Auch hier ist das Basiselement zusätzlich mit dem Tragelement verschweißt. An den U-Schenkeln 64, die, von den Krallen 66 aus gesehen, sich wie die Flügel 36 in Richtung der U-Basis 38 erstrecken, sind Erhebungen 68 angebracht, die sich in die Richtung der Innenseite der U-Schenkel 40 des Wischerarms 12 erstrecken. Die Erhebung 68 weisen ihrerseits zentrale Durchbrüche 70 auf.

An den einander zuweisenden Innenseiten der U-Schenkel 40 sind seinerseits Erhebungen 72 ausgeformt, die in Zusammenbaustellung in die Durchbrüche 70 des Basiselements 60 ragen. Die Erhebungen 72 sind in ihrer lateralen Ausdehnung kleiner als die Durchbrüche 70 und liegen in Zusammenbaustellung einseitig an den Durchbrüchen 70 an. Die U-Basis 62 des Basiselements 60 ist in einem Bereich, der den Erhebungen 68 naheliegt, entfernt und die U-Schenkel 74 des Basiselements 60 sind in Richtung der U-Basis 38 des Wischerarms 12 bogenförmig erhöht. In Zusammenbaustellung ergibt sich somit eine Bewegungsfreiheit des Wischblatts 14 gegenüber dem Wischerarm 12 um einen Berührungspunkt zwischen dem inneren Rand des Durchbruchs 70 und dem äußeren Rand der Erhebung 72, wobei ein Ausweichen des Basiselements 60 dadurch verhindert wird, dass die U-Schenkel 64 an der U-Basis 38 des Wischerarms anliegen.

Um seitliches Spiel klein zu halten oder ganz zu eliminieren, sind neben den Erhebungen 72 weitere, streifenartig ausgeführte Erhebungen 74 an den Innenseiten der U-Schenkel 74 ausgeformt.

Zur einfacheren Montage weisen die Erhebungen 72, die als Haltemittel dienen, Schrägen beziehungsweise Rundungen 76 auf. Bei der Montage des Wischblatts lenken, wenn das Basiselement 60 von unten zwischen die U-Schenkel eingeführt wird, die U-Schenkel 40 seitlich aus, bis die Erhebungen 72 in den Durchbrüchen 70 zu liegen kommen.

Während beim ersten Ausführungsbeispiel sowohl die örtliche Positionierung als auch die Übertragung der Anlagekraft 44 durch das Zusammenwirken der Erhebungen 46 mit den Durchbrüchen 52 erfolgt, wird beim zweiten Ausführungsbeispiel zwar die Positionierung durch das Zusammenwirken der Durchbrüche 70 mit den Erhebungen 72, das Übertragen der Anlagekraft 44, jedoch durch das Zusammenwirken der U-Basis 38 mit den in Richtung der U-Basis 38 fortgesetzten U-Schenkel 64 des Basiselements 60 erreicht.

Es sei noch erwähnt, dass die beschriebenen Durchbrüche im Einzelfall durch ausgeformte Mulden gebildet sein können, die es unnötig machen, während des Herstellungsprozesses tatsächlich Löcher ausstanzen zu müssen.

Ein erfindungsgemäßer Wischerarm 12 zeichnet sich somit dadurch aus, dass er eine U-Form aufweist, innerhalb derer Haltemittel angeordnet sind, die mit Gegenhaltemittel des Wischblatts zusammenwirken können. Die Haltemittel sind entweder als Gegenflügel 48 ausgebildet, die sich von der U-Basis in den von der U-Form umgriffenen Raum erstrecken oder als Erhebungen 72, die sich ausgehend von der Innenseite der U-Schenkel 40 erstrecken. Es ist auch denkbar, sowohl die Gegenflügel 48 als auch Erhebungen 72 in Kombination an der Innenseite der U-Schenkel 40 vorzusehen.

Ein erfindungsgemäßes Wischblatt zeichnet sich dadurch aus, dass es ein ein Tragelement 16 übergreifendes Basiselement 30 beziehungsweise 60 aufweist, das Erhebungen 46 oder Durchbrüche 70 aufweisende Flügel 36 beziehungsweise gleichwirkende U-Schenkel 64 besitzt. Diese Flügel 36 und/oder Durchbrüche 70 sind derart ausgestaltet, dass sie als Gegenhaltemittel mit Haltemittel 42 eines Wischerarms 14 zusammenwirken und eine Gelenkverbindung bereitstellen können.

## Patentansprüche

1. Vorrichtung zum Verbinden eines Wischerarms (12) mit einem Wischblatt (14), das ein eine Wischleiste (20) haltendes Tragelement (16) aufweist, an dem ein Basiselement (30, 60) als erstes Teil einer Kupplungsvorrichtung befestigt ist, wobei der Wischerarm (12) U-förmig ausgebildet ist und mit seiner U-Form das Basiselement (30, 60) übergreift und wobei am Wischerarm (12) Haltemittel (42, 72) ausgebildet sind, die ein zweites Teil einer Kupplungsvorrichtung bilden, die mit dem ersten Teil der Kupplungsvorrichtung zusammenwirken, wobei die Haltemittel (42, 72) als Gelenkmittel zum gelenkigen Halten des Wischblatts (14) ausgebildet sind, die auch eine vom Wischerarm (12) auf das Wischblatt (14) in einer Betriebsstellung auszuübende Anlagekraft (44) auf das Wischblatt (14) übertragen können und die zumindest annähernd vollständig vom Wischerarm (12) abgedeckt sind, **dadurch gekennzeichnet, dass** die Haltemittel (42, 72) innerhalb der U-Form des Wischerarms ausgebildet sind und das Basiselement (30, 60) zumindest zwei sich in Richtung der U-Basis (38) des Wischerarms (12) erstreckende Flügel (36, 64) aufweist, die mit dem Haltemittel (42, 72) im Sinne einer Gelenkverbindung korrespondierende Gegenhaltemittel (46, 70) aufweisen.

2. Vorrichtung nach Anspruch 1, **dadurch gekennzeichnet, dass** die Gegenhaltemittel Erhebungen (46, 68) oder Durchbrüche (70) sind.

3. Vorrichtung nach einem der vorhergehenden Ansprüche, **dadurch gekennzeichnet, dass** die Haltemittel (42, 72) an einander zugewandten Seiten der U-Schenkel (40) des Wischerarms (12) als Erhebungen (72) ausgebildet sind.

4. Vorrichtung nach Anspruch 3, **dadurch gekennzeichnet, dass** neben dem Haltemittel (72) weitere Erhebungen (74) angeordnet sind, die in Zusammenbaustellung an den Flügeln (64) des Basiselements (60) anliegen.

5. Vorrichtung nach einem der Ansprüche 1 bis 2, **dadurch gekennzeichnet, dass** die Haltemittel (42) als sich im Abstand (50) von den U-Schenkeln (40) erstreckende Gegenflügel (48) ausgebildet sind, die sich in Zusammenbaustellung mit den Flügeln (36) des Basiselements (30) überlappen.

6. Vorrichtung nach Anspruch 5, **dadurch gekennzeichnet, dass** sich die Flügel (36) in Zusammenbaustellung zwischen den U-Schenkeln (40) und die Gegenflügel (48) erstrecken.

7. Vorrichtung nach einem der vorhergehenden Ansprüche, **dadurch gekennzeichnet, dass** die Haltemittel (42, 72) und/oder die Gegenhaltemittel (36, 68) Schrägen (72) oder Rundungen aufweisen.

8. Wischerarm, für ein Wischblatt, das ein eine Wischleiste (20) haltendes Tragelement (16) aufweist, an dem ein Basiselement (30, 60) als erstes Teil einer Kupplungsvorrichtung befestigt ist, wobei der Wischerarm (12) U-förmig ausgebildet ist und mit seiner U-Form das Basiselement (30, 60) übergreift und wobei am Wischerarm (12) Haltemittel (42, 72) ausgebildet sind, die ein zweites Teil einer Kupplungsvorrichtung bilden, die mit dem ersten Teil der Kupplungsvorrichtung zusammenwirken, wobei die Haltemittel (42, 72) als Gelenkmittel zum gelenkigen Halten des Wischblatts (14) ausgebildet sind, die auch eine vom Wischerarm (12) auf das Wischblatt (14) in einer Betriebsstellung auszuübende Anlagekraft (44) auf das Wischblatt (14) übertragen können und die zumindest annähernd vollständig vom Wischerarm (12) abgedeckt sind, insbesondere für eine Vorrichtung nach einem der Ansprüche 1 bis 7, **dadurch gekennzeichnet, dass** die Haltemittel (42, 72) innerhalb der U-Form des Wischerarms ausgebildet sind und mit Gegenhaltemittel (46, 70) des Basiselements (30, 60) im Sinne einer Gelenkverbindung korrespondieren, die zumindest zwei sich in Richtung der U-Basis (38) des Wischerarms (12) erstreckende Flügel (36, 64) aufweisen.

9. Wischblatt, das ein eine Wischleiste (20) haltendes Tragelement (16) aufweist, an dem ein Basiselement (30, 60) als erstes Teil einer Kupplungsvorrichtung befestigt ist, und mit einem Wischerarm (12) verbindbar ist, der U-förmig ausgebildet ist und mit seiner U-Form das Basiselement (30, 60) übergreift und der Haltemittel (42) aufweist, die ein zweites Teil einer Kupplungsvorrichtung bilden, die mit dem ersten Teil der Kupplungsvorrichtung zusammenwirken, wobei die Haltemittel (42, 72) als Gelenkmittel zum gelenkigen Halten des Wischblatts (14) ausgebildet sind, die auch eine vom Wischerarm (12) auf das Wischblatt (14) in einer Betriebsstellung auszuübende Anlagekraft (44) auf das Wischblatt (14) übertragen können und die zumindest annähernd vollständig vom Wischerarm (12) abgedeckt sind, insbesondere für eine Vorrichtung nach einem der Ansprüche 1 bis 7, **dadurch gekennzeichnet, dass** die Haltemittel (42, 72) innerhalb der U-Form des Wischerarms ausgebildet sind und das Basiselement (30, 60) zumindest zwei sich in Richtung der U-Basis (38) des Wischerarms (12) erstreckende Flügel (36, 64) aufweist, die mit dem Haltemittel (42, 72) im Sinne einer Gelenkverbindung korrespondierende Gegenhaltemittel (46, 70) aufweisen.

## Claims

1. Device for connecting a wiper arm (12) to a wiper blade (14) which has a supporting element (16) which holds a wiper strip (20) and to which a base element (30, 60) is fastened as the first part of a coupling device, the wiper arm (12) being of U-shaped design and engaging with its U-shape over the base element (30, 60), and holding means (42, 72) being formed on the wiper arm (12) and forming a second part of a coupling device and interacting with the first part of the coupling device, the holding means (42, 72) being designed as articulated means for the articulated holding of the wiper blade (14) which can also transmit a bearing force (44) to the wiper blade (14), which bearing force is to be exerted by the wiper arm (12) on the wiper blade (14) in an operational position, and which are at least approximately completely covered by the wiper arm (12), **characterized in that** the holding means (42, 72) are formed within the U-shape of the wiper arm and the base element (30, 60) has at least two wings (36, 64) which extend in the direction of the U-base (38) of the wiper arm (12) and have mating holding means (46, 70) corresponding with the holding means (42, 72) with the effect of an articulated connection.

2. Device according to Claim 1, **characterized in that** the mating holding means are bumps (46, 68) or apertures (70).

3. Device according to one of the preceding claims, **characterized in that** the holding means (42, 72) are designed as bumps (72) on mutually facing sides of the U-limbs (40) of the wiper arm (12).

4. Device according to Claim 3, **characterized in that** further bumps (74) are arranged next to the holding means (72) and, in the assembled position, bear against the wings (64) of the base element (60).

5. Device according to either of Claims 1 and 2, **characterized in that** the holding means (42) are designed as mating wings (48) which extend at the distance (50) from the U-limbs (40) and, in the assembled position, overlap with the wings (36) of the base element (30).

6. Device according to Claim 5, **characterized in that**, in the assembled position, the wings (36) extend between the U-limbs (40) and the mating wings (48).

7. Device according to one of the preceding claims, **characterized in that** the holding means (42, 72) and/or the mating holding means (36, 68) have slopes (72) or rounded portions.

8. Wiper arm for a wiper blade which has a supporting element (16) which holds a wiper strip (20) and to which a base element (30, 60) is fastened as the first part of a coupling device, the wiper arm (12) being of U-shaped design and engaging with its U-shape over the base element (30, 60), and holding means (42, 72) being formed on the wiper arm (12) and forming a second part of a coupling device and interacting with the first part of the coupling device, the holding means (42, 72) being designed as articulated means for the articulated holding of the wiper blade (14) which can also transmit a bearing force (44) to the wiper blade (14), which bearing force is to be exerted by the wiper arm (12) on the wiper blade (14) in an operational position and which are at least approximately completely covered by the wiper arm (12), in particular for a device according to one of Claims 1 to 7, **characterized in that** the holding means (42, 72) are formed within the U-shape of the wiper arm and correspond with mating holding means (46, 70) of the base element (30, 60) with the effect of an articulated connection, which mating holding means have at least two wings (36, 64) which extend in the direction of the U-base (38) of the wiper arm (12).

9. Wiper blade which has a supporting element (16) which holds a wiper strip (20) and to which a base element (30, 60) is fastened as the first part of a coupling device, and can be connected to a wiper arm (12) which is of U-shaped design and engages with its U-shape over the base element (30, 60) and which has holding means (42) which form a second part of a coupling device and interact with the first part of the coupling device, the holding means (42, 72) being designed as articulated means for the articulated holding of the wiper blade (14) and can also transmit a bearing force (44) to the wiper blade (14), which bearing force is to be exerted by the wiper arm (12) on the wiper blade (14) in an operational position, and which are at least approximately completely covered by the wiper arm (12), in particular for a device according to one of Claims 1 to 7, **characterized in that** the holding means (42, 72) are formed within the U-shape of the wiper arm and the base element (30, 60) has at least two wings (36, 64) which extend in the direction of the U-base (38) of the wiper arm (12) and have mating holding means (46, 70) corresponding with the holding means (42, 72) with the effect of an articulated connection.

## Revendications

1. Dispositif pour relier un bras d'essuie-glace (12) à un balai d'essuie-glace (14) comportant un élément de support (16) portant une lame d'essuyage (20) et auquel est fixé un élément de base (30, 60) constituant une première partie d'un dispositif d'accouplement selon lequel le bras d'essuie-glace (12) a une forme en U qui chevauche l'élément de base (30, 60), et
le bras d'essuie-glace (12) comporte des moyens de fixation (42, 72) constituant une seconde partie du dispositif d'accouplement destiné à coopérer avec la première partie du dispositif d'accouplement,
les moyens de retenue (42, 72) étant réalisés sous la forme de moyens articulés pour retenir, de manière articulée, la lame d'essuie-glace (14) et transmettant également une force d'application (44) exercée par le bras d'essuie-glace (12) sur le balai d'essuie-glace (14) en position de fonctionnement, en étant pratiquement complètement couverts par le bras d'essuie-glace (12),
**caractérisé en ce que**
les moyens de fixation (42, 72) sont réalisés dans la forme en U du bras d'essuie-glace et l'élément de base (30, 60) comporte au moins deux ailes (36, 64) s'étendant en direction de la base en forme de U (38) du bras d'essuie-glace (12), ces ailes ayant des moyens de fixation complémentaire (46, 70) correspondant aux moyens de fixation (42, 72) pour réaliser une liaison articulée.

2. Dispositif pour relier un bras d'essuie-glace selon la revendication 1,
**caractérisé en ce que**
les moyens de fixation complémentaires sont des bossages (46, 68) ou des orifices (70).

3. Dispositif pour relier un bras d'essuie-glace selon l'une des revendications précédentes,
**caractérisé en ce que**
les moyens de fixation (42, 72) sont réalisés sur les faces en regard des branches en U (40) du bras d'essuie-glace (12) sous la forme de bossages (72).

4. Dispositif pour relier un bras d'essuie-glace selon la revendication 3,
**caractérisé en ce qu'**
à côté des moyens de fixation (72), il y a d'autres bossages (74) qui s'appliquent contre les ailes (64) de l'élément de base (60) lorsque l'ensemble est assemblé.

5. Dispositif pour relier un bras d'essuie-glace selon l'une des revendications 1 à 2,
**caractérisé en ce que**
les moyens de fixation (42) sont réalisés sous la forme de contre-ailes complémentaires (48) s'étendant à distance (50) des branches en U (40) et qui chevauchent les ailes (36) de l'élément de base (30) à l'état assemblé.

6. Dispositif pour relier un bras d'essuie-glace selon la revendication 5,
**caractérisé en ce que**
les ailes (36) s'étendent entre les branches en grand U (40) et les contre-ailes (48) en position montée.

7. Dispositif pour relier un bras d'essuie-glace selon l'une des revendications précédentes,
**caractérisé en ce que**
les moyens de retenue (42, 72) et/ou les moyens de retenue complémentaires (36, 48) comportent des rampes inclinées (72) ou des arrondis.

8. Bras d'essuie-glace pour un balai d'essuie-glace comportant un élément de support (16) tenant une lame d'essuie-glace (20) et auquel est fixé un élément de base (30, 60) constituant une première partie d'un dispositif d'accouplement,
le bras d'essuie-glace (12) ayant une forme de U chevauchant l'élément de base (30, 60) par sa forme en U, et
le bras d'essuie-glace (12) comportant des moyens de fixation (42, 72) constituant la seconde partie d'un dispositif d'accouplement coopérant avec la première partie du dispositif d'accouplement,
les moyens de fixation (42, 72) étant réalisés sous la forme de moyens d'articulation pour tenir réciproquement le balai d'essuie-glace (14), en pouvant transmettre également la force d'application (44) exercée par le bras d'essuie-glace (12) sur le balai (14) en position de fonctionnement pour appliquer cette force à l'application (44) au balai d'essuie-glace (14), en étant pratiquement couverts complètement par le bras d'essuie-glace (12),
et notamment pour un dispositif selon l'une des revendications 1 à 7,
**caractérisé en ce que**
les moyens de fixation (42, 72) sont réalisés dans la forme en U du balai d'essuie-glace et correspondent par leurs moyens de retenue complémentaires (46, 70) de l'élément de base (30, 60), dans le sens d'une liaison articulée, cette liaison ayant au moins deux ailes (36, 64) s'étendant dans la direction de la base en U (38) du bras d'essuie-glace (12).

9. Balai d'essuie-glace comportant un élément de support (16) d'une lame d'essuie-glace, l'élément de support comportant un élément de base (30, 60) constituant la première partie d'un dispositif d'accouplement et qui peut être relié à un bras d'essuie-glace (12) en forme de U qui couvre l'élément de base (30, 60), et des moyens de fixation (42, 72) constituant la seconde partie du dispositif d'accouplement coopérant avec la première partie de ce dispositif d'accouplement,
les moyens de fixation (42, 72) étant réalisés comme agents d'articulation pour relier de manière articulée le balai d'essuie-glace (14) en pouvant également transmettre au balai d'essuie-glace (14) la force d'application (44) exercée par le bras d'essuie-glace (12) sur le balai d'essuie-glace (14) dans sa position de fonctionnement en étant couverts au moins pratiquement complètement par le bras d'essuie-glace (12), notamment pour un dispositif selon l'une des revendications 1 à 7,
**caractérisé en ce que**
les moyens de fixation (42, 72) sont réalisés dans la forme en U du bras d'essuie-glace et l'élément de base (30, 60) comporte au moins deux ailes (36, 64) s'étendant dans la direction de la base en U (38) du bras d'essuie-glace (12), ces ailes ayant des moyens de fixation complémentaires (46, 70) correspondant aux moyens de fixation (42, 72) dans le sens d'une liaison articulée.
